# EUROPEAN PATENT SPECIFICATION

(11) **EP 2 558 898 B1**
(45) Date of publication and mention of the grant of the patent: **31.05.2023**
(21) Application number: 11716138.0
(22) Date of filing: 14.04.2011
(51) Int. Cl.: G02B 6/44

(54) **NETWORK DEVICE WITH DROP PORT ADAPTER CONNECTOR AND PASS THROUGH-PORT MULTIFIBRE ADAPTER**
PORTZUWEISUNG BEI FASEROPTISCHEN NETZWERKVORRICHTUNGEN
MAPPAGE DE PORT DANS DES DISPOSITIFS DE RÉSEAU À FIBRES OPTIQUES

(30) Priority: 14.04.2010 US 324104 P
(43) Date of publication of application: 20.02.2013
(73) Proprietor: Corning Optical Communications LLC, Charlotte, NC 28216 (US)
(72) Inventor: CONNER, Mark E, Granite Falls, North Carolina 28630 (US); FILIPIAK, Barton P, Columbia, Missouri 65203 (US); JENSEN, Joseph C, Lawndale, North Carolina 28090 (US); SCHNICK, Gary B, Granite Falls, North Carolina 28630 (US)
(74) Representative: Sturm, Christoph
(86) International application number: PCT/US2011/032420
(87) International publication number: WO 2011/130472

(56) References cited:
- EP-B1- 2 353 235
- WO-A1-2005/114286
- WO-A1-2010/044979
- WO-A1-2010/093794
- US-A1- 2002 015 563
- US-A1- 2005 163 448
- US-A1- 2006 029 334
- US-A1- 2010 303 408

## Description

### BACKGROUND

The present invention relates generally to fiber optic network devices, and more particularly to port mapping in fiber optic network devices to facilitate consistent, sequential optical connector terminations at a fiber distribution terminal.

Optical fiber is increasingly being used for a variety of broadband applications including voice, video and data transmissions. As a result of the ever-increasing demand for broadband communications, telecommunication and cable media service providers and/or operators are expanding their fiber optic networks to increase their networks' capacity and reach to provide more services, applications and information to more proximate and distant subscribers. To facilitate this capacity and reach, the fiber optic networks must employ additional fiber optic cable, hardware and components resulting in increased installation time, cost and maintenance. This results in the fiber optic networks becoming more complex, requiring architectures that allow for the most efficient delivery of fiber optic service to the subscriber. These architectures typically employ fiber optic network devices, such as optical connection terminals, for example, in branches of the fiber optic network. The fiber optic network devices act to optically interconnect the fiber optic cables of the branch, separate or combine optical fibers in multi-fiber cables, and/or split or couple optical signals, as may be necessary.

For example, a multi-fiber feeder cable from a central office or a transport cable from a head end, may connect to multiple multi-fiber distribution cables. Each distribution cable then may extend to a designated geographic area, thereby providing the optical service to subscribers in that area. A fiber optic drop cable from the subscriber premises may connect to the distribution cable to establish optical connectivity between the service provider and the subscriber in a fiber to the premises (FTTP) optical network. However, extending the drop cable from the subscriber premises all the way to the distribution cable may require a substantial length of drop cable resulting in extensive cost and installation time. Moreover, the cost and installation time would be increased and compounded if a separate connection to the distribution cable was needed for each drop cable. To reduce the attendant cost and timing, while still maintaining optical connectivity between the distribution cable and the drop cable, and, thereby, between the service provider and the subscriber, one or more intermediate optical connection points, between the distribution cable and the drop cable may be incorporated.

US2002/0015563 A1 is directed to optical connecting articles having optical fibers that are distributed in an encapsulated state and planar state with a plurality of flexible branches arranged with the main body. The optical connecting article is secured to a circuit board incorporating driving circuits for optical components. Respective optical connectors of optical connecting article are connected directly to respective optical components.

US 2006/029334 A1 and WO 2005/114286 A1 disclose other fiber optic network devices according to the prior art.

Other fiber optic network devices are known from WO 2010/044979 A1.

### SUMMARY

The invention provides a fiber optic network device comprising an input port adapted to receive a multi-fiber cable having active optical fibers designated in a consecutive sequence according to claim 1.

The accompanying drawings are included to provide a further understanding of the principles of the invention, and are incorporated into and constitute a part of this specification. The drawings illustrate one or more embodiment(s), and together with the description serve to explain the principles and operation of the invention.

### BRIEF DESCRIPTION OF THE FIGURES

Figure 1 is a schematic diagram of a portion of a fiber optic network;
Figure 2 is a schematic diagram of a portion of a fiber optic network according to an exemplary embodiment, illustrating optical connection terminals in a series connected arrangement;
Figure 3 is a schematic diagram of a portion of a fiber optic network not according to the invention;
Figure 4 is a schematic diagram of a portion of a fiber optic network not according to the invention;
Figure 5 is a schematic diagram of a portion of a fiber optic network not according to the invention;
Figure 6 is a schematic diagram of a portion of a fiber optic network not according to the invention;
Figure 7 is a perspective view of a structure of a optical connection terminal having four ports; and
Figure 8 is an internal perspective view of the structure of the optical connection terminal of Figure 7, illustrating the predetermined routing of optical fibers based on a port mapping scheme.

### DETAILED DESCRIPTION

In the following detailed description, for purposes of explanation and not limitation, example embodiments disclosing specific details are set forth to provide a thorough understanding of the principles of the present invention. Descriptions of well-known devices, methods and materials may be omitted so as not to obscure the description of the principles of the present invention. Finally, wherever applicable, like reference numerals refer to like elements.

Various embodiments of a fiber optic network device positioned in a fiber optic network and having a port mapping scheme are provided. To facilitate the description of the various embodiments, an optical connection terminal may be used. It should be understood that as used herein the term optical connection terminal is not limited to any specific type, style, structure, construction or arrangement of fiber optic network device. Accordingly, for purposes herein optical connection terminal shall mean and include, but is not limited to, devices and/or structures which may typically be referred to as a fiber distribution terminal, a local convergence point, a fiber distribution hub, a fiber distribution cabinet, a splitter cabinet, a multiport, a fiber terminal, a multiple dwelling closure, a local convergence cabinet, a pedestal, a network access point, a distribution closure, and the like.

Further, as used herein and well known and understood in the art, the term "drop cable" shall mean and include a fiber optic cable from a subscriber premises. Also, the term "distribution cable" shall mean and include any one or more of fiber optic cables in the form of a feeder cable from a central office of a telecommunications service provider or operator, a transport cable from a head end of cable media service provider or operator, as well as a fiber optic cable that may be optically connected to a feeder cable or a transport cable and used to further distribute the optical services toward a subscriber premises. The term "branch cable" shall mean and include any fiber optic cable, including but not limited to, a tether cable and/or a stub cable, as those terms are known in the art, and any other cable that may optically connect to and/or extend from a distribution cable for the purpose of optically connecting the distribution cable to a drop cable. The distribution cable, branch cable and/or drop cable may be any type of fiber optic cable having one or more optical fibers.

The terms "fiber optic cables" and/or "optical fibers" include all types of single mode and multi-mode light waveguides, including one or more optical fibers that may be upcoated, buffered, ribbonized and/or have other organizing or protective structure in a cable such as one or more tubes, strength members, jackets or the like. Likewise, other types of suitable optical fibers include bend-insensitive optical fibers, or any other expedient of a medium for transmitting light signals. An example of a bend-insensitive optical fiber is ClearCurve^{®} Multimode fiber commercially available from Corning Incorporated. In addition, the optical fibers may be color-coded. The color-coding is in accordance with TIA/EIA 598 "Optical Fiber Cable Color Coding," which provides for color-coding optical fibers of the first 12 fibers in an fiber optic cable in the following sequence: F1 - blue (BL), F2 - orange (OR), F3 - green (GR), F4 - brown (BR), F5 - slate (SL), F6 - white (WH), F7 - (RD), F8 - black (BK), F9 - yellow (YL), F10 - violet (VI), F11 - rose (RS), and F12 - aqua (AQ). The designations F1 through F12 refer to position designations that will be used for purposes of explaining the embodiments in this disclosure.

The drop cable may be, "pre-connectorized" to be readily connected to and disconnected from a drop port of the optical connection terminal. At the other end, the drop cable may be optically coupled to optical fibers within a conventional closure, such as, but not limited to, a network interface device (NID) of the types available from Corning Cable Systems LLC of Hickory, N.C. In the exemplary embodiments shown and described herein, the drop cables extend from a closure located at a subscriber premises and are optically coupled through the drop ports of the optical connection terminal to one or more optical fibers of a branch cable and/or may be optically connected to the branch cable through an optical device, such as a splitter, wave division multiplexer WDM, or the like. Thus, individual drop cables may optically couple to respective individual optical fibers, and/or an individual drop cable may optically couple to more than one optical fibers. In turn, the optical fibers of the branch cable, or optically connected to the branch cable, are optically coupled to optical fibers of the distribution cable, at a mid-span access location on the distribution cable. The mid-span access location may be provided at an aerial closure, a buried closure (also referred to as a below grade closure) or an above ground telecommunications cabinet, terminal, pedestal, or the like. Likewise, the optical connection terminal may be provided at an aerial location, such as mounted to an aerial strand between utility poles or mounted on a utility pole, at a buried location, such as within a hand-hole or below grade vault, or at an above-ground location, such as within a cabinet, terminal, pedestal, above grade vault, or the like. Thus, the optical connection terminal provides an accessible interconnection terminal for readily connecting, disconnecting or reconfiguring drop cables in the optical network, and in particular, for optically coupling drop cables with a distribution cable. The terms connect, interconnect, and couple shall be understood to mean, without limitation, the passage, flow, transmission, or the like of an optical signal between one or more of optical cables, optical fibers, components, and/or connectors, or the like and one or more of optical cables, optical fibers, components, and/or connectors, or the like; whether or not by direct or indirect physical connection, to establish optical communication or connectivity.

A branching point may be established at a mid-span access location and/or at the end of a distribution cable. For purposes herein, reference to mid-span access location shall be understood to also include the end of the distribution cable. The distribution cable may extend from a distribution point, such as a distribution cabinet, fiber distribution hub, local convergence cabinet, or the like. At the distribution point the distribution cable may optically connect to a feeder cable extended from a central office or a transport cable from a head end, as the case may be.

The direction in the fiber optic network toward or facing the central office or head end may be referred to as "upstream" and the direction facing away from the central office or head end may be referred to as "downstream." It should be understood, though, that using the terms "upstream" or "downstream" does not indicate the direction in which the optical signals are transmitted or carried in the optical fibers. Thus, an optical signal may be transmitted in both the upstream or downstream direction.

Due to the port mapping scheme more than one optical connection terminal may be included in the branch. Because more than one optical connection terminal may be included in the branch, distributed, hierarchical architectures may be employed to position the optical connection terminals at more convenient locations with respect to the subscriber premises. As a result, drop cables extending from a subscriber premises may be optically coupled to the fiber optic network at an optical connection terminal more closely located to the subscriber premises as opposed to an optical connection terminal located more distantly or at the actual mid-span access location provided on the distribution cable. Thus, the overall length of the drop cables may be substantially reduced.

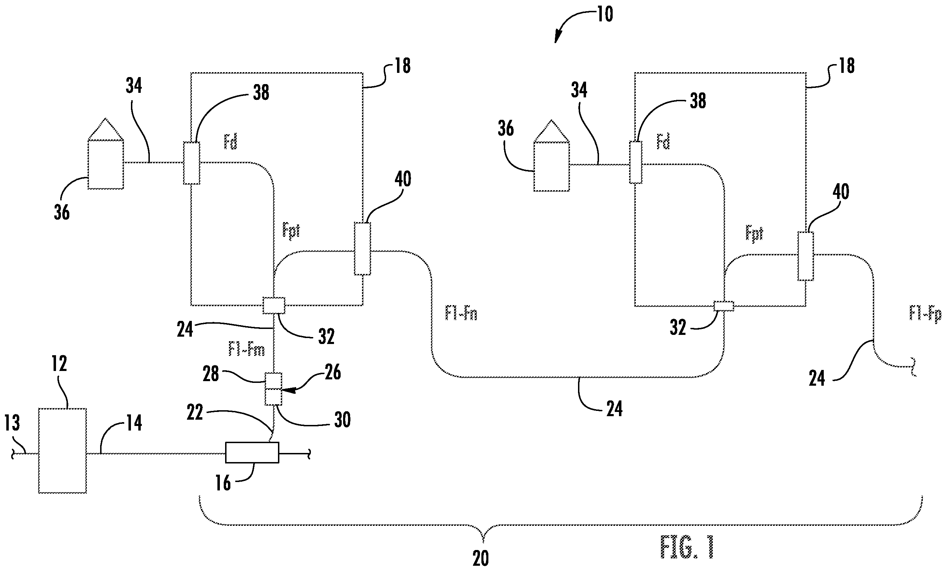

Referring now to Fig. 1, there is shown an example of optical connection terminals configured with a port mapping scheme in a fiber optic network 10, which may be at any point in the fiber optic network, near to or distant from the central office or head end. The fiber optic network 10 comprises a distribution terminal 12 which may receive a feeder/transport cable 13 from the central office or head end (not shown). A distribution cable 14 extends from the distribution terminal 12 to a branching point 16 and to multiple optical connection terminals 18, only two of which are shown in Figure 1. The branching point 16 provides a branch point for branch 20. A tether cable 22 extends from the branching point 16. The tether cable 22 comprises optical fibers of the distribution cable 14 split off from the distribution cable 14. The optical fibers in the tether cable 22 optically connect to the optical fibers in a branch cable 24 through network connection 26. In this way, the optical fibers of the branch cable 24 may be optically connected to the optical fibers of the distribution cable 14, and optical coupling of the branch 18 to the distribution terminal 12 may be established through the distribution cable 14.

The network connection 26 may comprise a single fiber or multi-fiber connector/receptacle assembly. In the example shown in Figure 1, a network connector 28 attached to the end of the branch cable 24 is received by a network connection receptacle 30. The branch cable 24 extends to the optical connection terminals 18 through branch cable port 32. The cable port 32 may allow the optical fibers of the branch cable 24 to pass through into the optical connection terminals 18. Alternatively, the cable port 32 may have a fiber optic adapter, for example, a multi-fiber adapter, seated therein and the optical fibers of the branch cable 24 may connect to the fiber optic adapter. In this case, optical fibers disposed in the optical connection terminals 18, may connect with the fiber optic adapter to establish optical connectivity with the optical fibers of the branch cable 24. A drop cable 34 extends from the optical connection terminal 18 to subscriber premises 36. In this manner, branch cable 24 provides optical communication between the distribution cable 14 and the subscriber premises 36 through the optical connection terminals 18.

The branch cable 24 is shown in segments with each segment of the branch cable 24 comprising optical fibers designated by the letter "F" for purposes of discussing the embodiments. A segment of the branch cable 24 is shown extending from the distribution cable 14 at branching point 16 to an optical connection terminal 18, while another segment of the branch cable 24 is shown extending from one of the optical connection terminals 18 to another one of the optical connection terminals 18. The segment of the branch cable 24 extending from the distribution cable 14 comprises optical fibers F1-Fm. The segment of the branch cable 24 that extends from one of the optical connection terminals 18 to another one of the optical connection terminals 18 comprises optical fibers F1-Fn and F1-Fp, respectively. The designation of "m", "n" and "p" indicates the number of optical fibers in that segment of the branch cable 24. In this exemplary embodiment, "m," "n," and "p" may be different, indicting a different number of optical fibers in each of the segments of the branch cable 24. Alternatively, any two or all three of "m," "n" and "p" may be equal, indicating that the number of optical fibers is the same in each segment of branch cable 24. One or more of m, n and p may equal 1.

In Figure 1, the optical connection terminals 18 each are configured with a port mapping scheme. The port mapping scheme predetermines the routing and optical coupling of the optical fibers in the branch cable 24 to one or more subscriber premises 36 via a drop port 38 in one or both of the optical connection terminals 18. In this embodiment, optical fibers "F1-Fm" of the segment of branch cable 24 enter the first optical connection terminal 18 via branch cable port 32. At least one of the optical fibers F1-Fm, designated as Fd, routes to at least one drop port 38 based on the port mapping scheme. Also, based on the port mapping scheme, Fd, may be anynumber of optical fibers. As such, Fd may be one optical fiber, in other words an individual optical fiber, or may be more than one optical fiber, in other words multiple optical fibers, as a nonlimiting example, a pair of optical fibers, routed to a drop port 38. Additionally or alternatively, at least one of the optical fibers F1-Fm, designated as Fpt routes to the pass-through port 40 also based on the port mapping scheme. The optical fiber designated as Fpt may or may not be and/or include the optical fiber designated as Fd depending on the port mapping scheme. It should be understood that optical connection terminal 18 may have a plurality of drop ports 38 and a plurality of pass-through ports 40. Additionally, Fd may comprise one or a plurality of optical fibers and Fpt may comprise one or a plurality of optical fibers.

A segment of the branch cable 24 comprising optical fibers designated as F1-Fn extends from the first optical connection terminal 18 to the second optical connection terminal 18. The pass-through port 40 is operable for optically coupling the optical fiber Fpt to one of the optical fibers F1-Fn in the segment of the branch cable 24 that extends from the first optical connection terminal 18. The optical fibers F1-Fn of the segment of branch cable 24 enter the second optical connection terminal 18 via the branch cable port 32. Similar to the first optical connection terminal 18, in the second optical connection terminal 18 the optical fiber designated as Fd of optical fibers F1-Fn routes to the drop port 38 based on a port mapping scheme. Also similar to the first optical connection terminal 18, the optical fiber Fpt of the optical fibers F1-Fn routes to the pass-through port 40 based on a port mapping scheme. And the optical fiber Fpt may or may not be or include Fd depending on the port mapping scheme. Whether optical fibers designated as Fd optically couple with the first drop cable 34 via the drop port 38 in the first optical connection terminal 18 and/or optically couple with the second drop cable 34 via the drop port 38 in the second optical connection terminal 18 is predetermined based the desired port mapping scheme.

Although not shown in Figure 1, a network connector 28 may be used to connect the segment of the branch cable 24 extending from the first optical connection terminal 18 to the pass-through port 40 of the first optical connection terminal 18. In such case, the manner in which optical fiber Fpt connects to the network connector 28 may be in a pre-determined alignment to result in the desired port mapping scheme. Additionally, a multi-fiber connector and or a splice, such as a fusion splice, may be used to connect the segment of the branch cable 24 to an optical connection terminal 18 in, through and/or instead of the branch cable port 32.

The port mapping scheme of the first optical connection terminal 18 may or may not be the same as the port mapping scheme of the second optical connection terminal 18. However, the port mapping scheme of either and/or both the first and second optical connection terminals 18 serves to predetermine the routing and optical coupling of optical fibers Fd and Fpt for both the first and second optical connection terminals 18. In other words, the port mapping scheme predetermines the routing and optical coupling not only of the distribution cable 14 and the drop cable 34 extending from the drop port 38 of the first optical connection terminal 18, but also of the distribution cable 14 and the drop cable 34 extending from the drop port 38 of the second optical connection terminal 18 in branch 20. And, accordingly, the port mapping scheme, predetermines the optical coupling of the distribution cable 14 and the drop cable 34 extending from the drop port 38 of the second optical connection terminal 18, which, in such case, is through the pass-through port 40 of the first optical connection terminal 18. Further, a segment of the branch cable 24 comprising optical fibers designated as "F1-Fp," may extend from the second optical connection terminal 18 to successive optical connection terminal 18 in the branch 20. The successive optical connection terminal 18 may also be configured with a port mapping scheme. In this manner, the port mapping scheme may predetermine the optical coupling between the distribution cable 14 and the drop ports 38 of the optical connection terminals 18 in the branch 20.

Although not shown in Figure 1, the optical connection terminal 18 may include other optical components including, but not limited to a splitter, splice protector, WDM device, splice holder and tray, routing guide and slack storage. The port mapping scheme may predetermine the configuring of the optical connection terminal with one or more of these other optical components, and/or the routing of optical fibers to and optically coupling of optical fibers with one or more of the components. As an example, an optical fiber from the branch cable 24 may optically couple to a splitter. The optical signal carried by that optical fiber may be split into multiple optical signals by the splitter. Optical fibers carrying the optical signals may optically couple to a drop cable via one or more of the drop connector ports and/or pass-through connector ports. The optical fiber Fd may output from the splitter and route to the drop port 38 in the optical connection terminal 18.

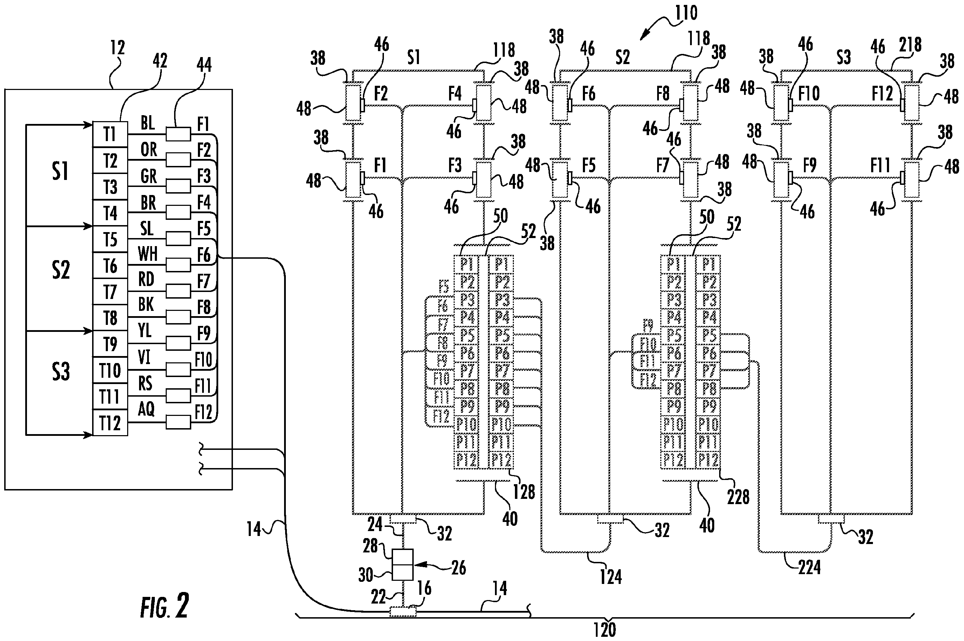

Turning now to Figures 2, 3 and 4, there are shown examples of fiber optic networks having branches from a distribution terminal 12 to series-connected optical connection terminals. Figure 2 illustrates fiber optic network 110 in which the distribution cable 14 is shown connected to and extending from distribution terminal 12 to branching point 16 in branch 120. The distribution terminal 12 comprises a termination field 42 having any number of termination points. In Figure 2 twelve termination points T1-T12 are shown. Twelve optical fibers, which may be in the form of pigtails, extend from the termination points to splices 44. Twelve optical fibers F1 - F12 from the distribution cable 14 are shown spliced to respective optic fibers extending from termination points T1-T12. The splices are arranged such that the optical fibers F1-F12 are in a color-coded sequence of F1 - blue (BL), F2 - orange (OR), F3 - green (GR), F4 - brown (BR), F5 - slate (SL), F6 - white (WH), F7 - (RD), F8 - black (BK), F9 - yellow (YL), F10 - violet (VI), F11 - rose (RS), and F12 - aqua (AQ). Thus, when the field technician splices and/or terminates the optical fibers in the distribution terminal 12, he or she will understand that an optical fiber color indicates the optical fiber in the F1-F12 sequence. Although individual splices 44 are shown, it should be understood that the splices 44 may be part of a mass fusion splice, in particular in the case that optical fibers F1-F12 are in the form of a ribbonized cable. Additionally, although twelve optical fibers are shown in Figure 2, it should be understood that the distribution cable 14 may comprise any number of optical fibers. For example, other optical fibers in the distribution cable may splice and terminate to other termination fields in the distribution terminal 12. In this manner, the termination fields may be organized as appropriate for other branches in the fiber optic network.

Tether cable 22 comprising optical fibers F1-F12 split off from the distribution cable 14 at the branching point 16 connects to branch cable 24 via network connection 26 to form branch 120. Branch 120 comprises the optical connection terminals 118 designated as "S1" and "S2" and optical connection terminal 218 designated as "S3." Optical connection terminal 118 (S1 and S2) comprises four drop ports 38 and a pass-though port 40. Optical connection terminal 218 (S3) comprises four drop ports. The optical fibers F1-F12 in branch cable 24 enter optical connection terminal 118 S1 through branch cable port 32. In optical connection terminal 118 S1 four optical fibers F1-F4 each route and connect to a drop port 38 according to a certain port mapping scheme. The optical fibers F1-F4 may have connectorized ends 46. The connectorized ends 46 may received by adapters 48 seated in the drop cable ports 38. Although not shown in Figure 2, drop cables 34 having connectorized ends may be received by the adapters 48 external to the optical connection terminal 118 and, thereby, an optical connection may be established between the optical fibers F1-F4 and the optical fiber of the respective drop cable 34 extending to subscriber premises. In this manner, at the distribution terminal 12, the field technician based on the certain port mapping scheme may understand that optical fibers F1-F4 provide optical communication to particular subscriber premises connected to optical termination panel section S1. Additionally, the field technician can splice and terminate the optical fibers F1-F4 by just matching the color-coding of the optical fibers extending from termination points T1-T4, i.e. BL, OR, GR and BR. Termination points T1-T4 may be identified at the distribution terminal 12 with optical terminal 118 S1 and, therefore, with the particular subscriber premises serviced by the optical terminal 118 S1. This is indicated by the section designated as "S1" in the distribution terminal 12. The section "S1" is a designated section of the consecutive sequence, with the plurality of optical fibers F1-F4 aligning to that section of the consecutive sequence.

In the optical connection terminal 118 S1, optical fibers F5-F12 route to the pass-through port 40. Optical fibers F5-F12 are terminated by a multi-fiber connector 50 which is received by a multi-fiber adapter 52 seated in the pass-through port 40. The multi-fiber connector 50 has twelve ports P1-P12 to which optical fibers may connect. Instead of optical fibers F5-F12 connecting to ports P5-P12, optical fibers F5-F12 connect to ports P3-P10, respectively, to centrally align the optical fibers F5-F12 on the multi-fiber connector 50 according to a certain port mapping scheme. The branch cable segment 124 may comprise eight fibers and may be terminated by a network connector 128. The eight optical fibers in the branch cable segment 124 may connect to ports P3-P10 of network connector 128 to centrally align the optical fibers of the branch cable segment 124 in the network connector 128. The network connector 128 may be received by the multi-fiber adapter 52. Because the optical fibers of the branch cable segment 124 are centrally aligned on the network connector 128, being connected to ports P3-P10, the optical fibers of the branch cable segment 124 align with optical fiber F5-F12 when both the multi-fiber connector 50 and the network connector 128 are received by the multi-fiber adapter 52. In this way, an optical connection is established between the optical fibers F5-F12 of the branch cable 124 and the eight optical fibers of the branch cable segment 124 and the consecutive sequence of optical fiber designations and color-coding at the distribution terminal 12 remains consistent.

This consistency may be further illustrated with reference to optical connection terminal 118 S2. Because the optical fibers in the branch cable segment 124 optically connect to optical fibers F5-F12, those optical fiber designation will be used when discussing optical connection terminal 118 S2. The branch cable segment 124 extends from optical connection terminal 118 S1 to optical connection terminal 118 S2 entering optical connection terminal 118 S2 at branch cable port 32. In the optical connection terminal 118 S2, optical fibers F5-F8 each route and connect to a drop port 38, according to a certain port mapping scheme. Similar to optical connection terminal 118 S1, the optical fibers F5-F8 may have connectorized ends 46. The connectorized ends 46 may received by adapters 48 seated in the drop cable ports 38 and, thereby, an optical connection may be established between the optical fibers F5-F8 and the optical fiber of the respective drop cable 34 extending to subscriber premises. In this manner, at the distribution terminal 12, the field technician may understand that optical fibers F5-F8 provide optical communication to particular subscriber premises connected to optical termination panel 118 S2. Additionally, the field technician can splice and terminate the optical fibers F5-F8 by just matching the color-coding of the optical fibers extending from termination points T5-T8, i.e. SL, WH, RD and BK, respectively. Termination points T5-T8 may be identified at the distribution terminal 12 with optical terminal 118 S2 and, therefore, with the particular subscriber premises serviced by the optical terminal 118 S2. This is indicated by the section "S2" in the distribution terminal 12. The section "S2" may be a designated section of the consecutive sequence, with the plurality of optical fibers F5-F8 aligning to that section of the consecutive sequence.

In the optical connection terminal 118 S2, optical fibers F9-F12 route to the pass-through port 40. Optical fibers F9-F12 may be terminated by a multi-fiber connector 50 which is received by a multi-fiber adapter 52 seated in the pass-through port 40. The multi-fiber connector 50 has twelve ports P1-P12 to which optical fibers may connect. Instead of optical fibers F9-F12 connecting to ports P9-P12, optical fibers F5-F12 connect to ports P5-P8, respectively, to centrally align the optical fibers F9-F12 on the multi-fiber connector 50 according to a certain port mapping scheme. The branch cable segment 224 may comprise four fibers and may be terminated by a multi-fiber network connector 228. The four optical fibers in the branch cable segment 224 may connect to ports P5-P8 of network connector 228 to centrally align the optical fibers of the branch cable segment 224 in the network connector 228. The network connector 228 may be received by the multi-fiber adapter 52. Because the optical fibers of the branch cable segment 224 are centrally aligned on the network connector 228, being connected to ports P5-P8, the optical fibers of the branch cable segment 224 align with optical fiber F9-F12 when both the multi-fiber connector 50 and the network connector 228 are received by the multi-fiber adapter 52. In this way, an optical connection is established between the optical fibers F9-F12 and the four optical fibers of the branch cable segment 224 and the consecutive sequence of optical fiber designations and color-coding at the distribution terminal 12 remains consistent.

With continuing reference to Figure 2, because the optical fibers in the branch cable segment 224 optically connect to optical fibers F9-F12, those optical fiber designation will be used when discussing optical connection terminal 218 S3. The branch cable segment 224 extends from optical connection terminal 118 S2 to optical connection terminal 218 S3 entering optical connection terminal 218 S3 at branch cable port 32. In the optical connection terminal 218 S3, optical fibers F9-F12 each route and connect to a drop port 38 according to a certain port mapping scheme. Similar to optical connection terminals 118 S1 and S2, the optical fibers F9-F12 may have connectorized ends 46. The connectorized ends 46 may received by adapters 48 seated in the drop cable ports 38 and, thereby, an optical connection may be established between the optical fibers F9-F12 and the optical fiber of the respective drop cable 34 extending to subscriber premises. In this manner, at the distribution terminal 12, based on the certain port mapping scheme, the field technician may understand that optical fibers F9-F12 provide optical communication to particular subscriber premises connected to optical termination panel 218 S3. Additionally, the field technician can splice and terminate the optical fibers F9-F12 by just matching the color-coding of the optical fibers extending from termination points T9-T12, i.e. YL, VI, RS and AQ, respectively. Termination points T9-T12 may be identified at the distribution terminal 12 with optical terminal 218 S3 and, therefore, with the particular subscriber premises serviced by the optical connection terminal 218 S3. This is indicated by the section "S3" in the distribution terminal 12. In Figure 2, optical connection terminal 218 S3 does not have a pass-through port 40 indicating that in this embodiment no additional optical connection terminals are included in branch 120. The section "S3" may be a designated section of the consecutive sequence, with the plurality of optical fibers F9-F12 aligning to that section of the consecutive sequence.

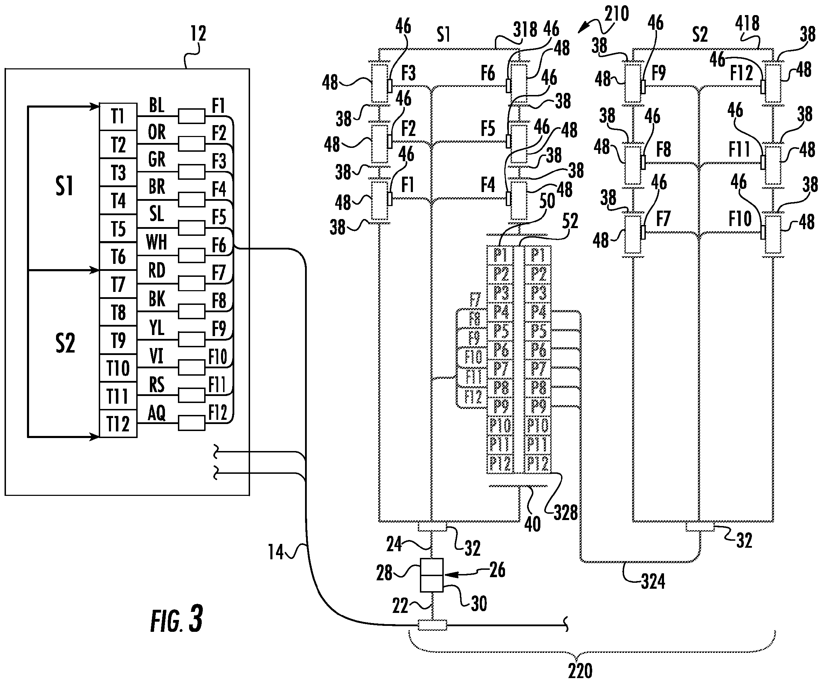

Referring now to Figure 3, another example of a series connected fiber optic network 210 is illustrated. In Figure 3, the distribution terminal 12, distribution cable 14, and tether cable 22 with the connection to the branch cable 24 is consistent with that described with respect to Figure 2, and, therefore, will not be repeated with respect to Figure 3. As shown in Figure 3, branch 220 comprises the optical connection terminal 318 designated as "S1" and the optical connection terminal 418 designated as "S2." Optical connection terminal 318 (S1) comprises six drop ports 38 and a pass-though port 40. Optical connection terminal 418 (S2) comprises six drop ports. The optical fibers F1-F12 in branch cable 24 enter optical connection terminal 318 S1 through branch cable port 32. In optical connection terminal 318 S1 six optical fibers F1-F6 each route and connect to a drop port 38, according to a certain port mapping scheme, and optically connect to respective drop cable 34 extending to subscriber premises in the same manner as discussed with reference to Figure 2. At the distribution terminal 12, based on the certain port mapping scheme the field technician may understand that optical fibers F1-F6 provide optical communication to particular subscriber premises connected to optical termination panel S1. Additionally, the field technician can splice and terminate the optical fibers F1-F6 by just matching the color-coding of the optical fibers extending from termination points T1-T6, i.e. BL, OR, GR, BR, SL and WH. Termination points T1-T6 may be identified at the distribution terminal 12 with optical terminal S1 and, therefore, with the particular subscriber premises serviced by the optical terminal S1. This is indicated by the section "S1" in the distribution terminal 12. The section "S1" may be a designated section of the consecutive sequence, with the plurality of optical fibers F1-F6 aligning to that section of the consecutive sequence.

In the optical connection terminal 318 S1, optical fibers F7-F12 route to the pass-through port 40. Optical fibers F7-F12 may be terminated by a multi-fiber connector 50 which is received by a multi-fiber adapter 52 seated in the pass-through port 40. The multi-fiber connector 50 has twelve ports P1-P12 to which optical fibers may connect. Instead of optical fibers F7-F12 connecting to ports P7-P12, optical fibers F7-F12 connect to ports P4-P9, respectively, to centrally align the optical fibers F7-F12 on the multi-fiber connector 50 according to a certain port mapping scheme. The branch cable segment 324 may comprise six optical fibers and may be terminated by a network connector 328. The six optical fibers in the branch cable segment 324 may connect to ports P4-P9 of network connector 328 to centrally align the optical fibers of the branch cable segment 324 in the network connector 328. The network connector 328 may be received by the multi-fiber adapter 52. Because the optical fibers of the branch cable segment 324 are centrally aligned on the network connector 328, being connected to ports P4-P9, the optical fibers of the branch cable segment 324 align with optical fiber F7-F12 when both the multi-fiber connector 50 and the network connector 328 are received by the multi-fiber adapter 52. In this way, an optical connection is established between the optical fibers F7-F12 of the branch cable 324 and the six optical fibers of the branch cable segment 324 and the consecutive sequence of optical fiber designations and color-coding at the distribution terminal 12 remains consistent.

With continuing reference to Figure 3, because the optical fibers in the branch cable segment 324 optically connect to optical fibers F7-F12, those optical fiber designation will be used when discussing optical connection terminal 418 S2. The branch cable segment 324 extends from optical connection terminal 318 S1 to optical connection terminal 418 S2 entering optical connection terminal 418 S2 at branch cable port 32. In the optical connection terminal 418 S2, optical fibers F7-F12 each route and connect to a drop port 38. Similar to optical connection terminals 218 S1, the optical fibers F7-F12 route to the drop cable ports 38 according to a certain port mapping scheme and, thereby, an optical connection may be established between the optical fibers F7-F12 and the optical fiber of the respective drop cable 34 extending to subscriber premises. In this manner, at the distribution terminal 12, based on the certain port mapping scheme, the field technician may understand that optical fibers F7-F12 provide optical communication to particular subscriber premises connected to optical termination panel 418 S2. Additionally, the field technician can splice and terminate the optical fibers F7-F12 by just matching the color-coding of the optical fibers extending from termination points T7-T12, i.e., RD, BK, YL, VI, RS and AQ, respectively. Termination points T7-T12 may be identified at the distribution terminal 12 with optical terminal 418 S2 and, therefore, with the particular subscriber premises serviced by the optical connection terminal 418 S2. This is indicated by the section "S2" in the distribution terminal 12. The section "S2" may be a designated section of the consecutive sequence, with the plurality of optical fibers F7-F12 aligning to that section of the consecutive sequence. In Figure 3, optical connection terminal 418 S2 does not have a pass-through port 40 indicating that in this embodiment no additional optical connection terminals are included in branch 220.

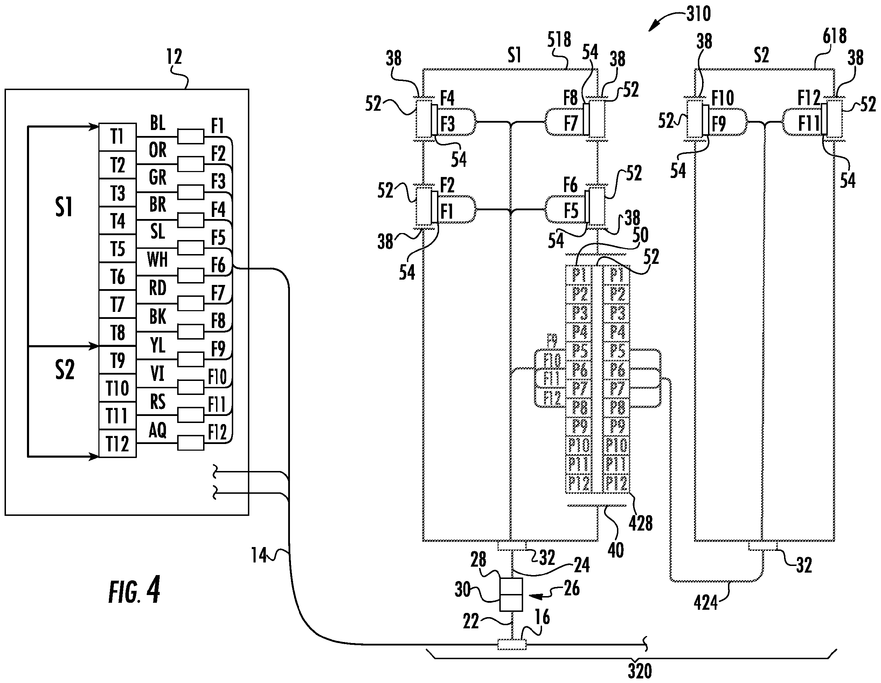

Referring now to Figure 4, another example of a series connected fiber optic network 310 is illustrated. In Figure 3, the distribution terminal 12, distribution cable 14, and tether cable 22 with the connection to the branch cable 24 is consistent with that described with respect to Figure 2, and, therefore, will not be repeated with respect to Figure 4. As shown in Figure 4, branch 320 comprises the optical connection terminal 518 designated as "S1" and the optical connection terminal 618 designated as "S2." Optical connection terminal 518 (S1) comprises four drop ports 38 and a pass-though port 40. Optical connection terminal 618 (S2) comprises two drop ports 38. The optical fibers F1-F12 in branch cable 24 enter optical connection terminal 518 S1 through branch cable port 32. In optical connection terminal 518 S1 eight optical fibers F1-F8 route and connect in pairs, i.e., two optical fibers, to a drop port 38 according to a certain port mapping scheme. In this example the optical fiber pairs are F1 and F2, F3 and F4, F5 and F6, F7 and F8, with each pair terminated by a multi-fiber connector, which in the example shown in Figure 4, is two-fiber connector 54, received by a multi-fiber adapter 52. Each optical fiber pair optically connect to optical fibers in a respective drop cable 34 extending to subscriber premises. At the distribution terminal 12, based on the certain port mapping scheme, the field technician may understand that optical fibers F1-F8 provide optical communication to particular subscriber premises connected to optical termination panel S1. Additionally, the field technician can splice and terminate the optical fibers F1-F8 by just matching the color-coding of the optical fibers extending from termination points T1-T8, i.e. BL, OR, GR, BR, SL, WH, RD and BK. Termination points T1-T8 may be identified at the distribution terminal 12 with optical terminal S1 and, therefore, with the particular subscriber premises serviced by the optical terminal S1. This is indicated by the section "S1" in the distribution terminal 12. The section "S1" may be a designated section of the consecutive sequence, with the plurality of optical fibers F1-F8 aligning to that section of the consecutive sequence. This example may be appropriate when the subscriber premises 36 is a commercial enterprise requiring a higher bandwidth service, thereby requiring two fiber optic cables extended to the subscriber premises 36.

In the optical connection terminal 518 S1, optical fibers F9-F12 route to the pass-through port 40. Optical fibers F9-F12 may be terminated by a multi-fiber connector 50 which is received by a multi-fiber adapter 52 seated in the pass-through port 40. The multi-fiber connector 50 has twelve ports P1-P12 to which optical fibers may connect. Instead of optical fibers F9-F12 connecting to ports P9-P12, optical fibers F9-F12 connect to ports P5-P8, respectively, to centrally align the optical fibers F9-F12 on the multi-fiber connector 50 according to a certain port mapping scheme. The branch cable segment 424 may comprise four optical fibers and may be terminated by a network connector 428. The four optical fibers in the branch cable segment 424 may connect to ports P5-P8 of network connector 428 to centrally align the optical fibers of the branch cable segment 424 in the network connector 428. The network connector 428 may be received by the multi-fiber adapter 52. Because the optical fibers of the branch cable segment 424 are centrally aligned on the network connector 428, being connected to ports P5-P8, the optical fibers of the branch cable segment 424 align with optical fiber F9-F12 when both the multi-fiber connector 50 and the network connector 428 are received by the multi-fiber adapter 52. In this way, an optical connection is established between the optical fibers F9-F12 of the branch cable 424 and the four optical fibers of the branch cable segment 424, and the consecutive sequence of optical fiber designations and color-coding at the distribution terminal 12 remains consistent.

With continuing reference to Figure 4, because the optical fibers in the branch cable segment 424 optically connect to optical fibers F9-F12, those optical fiber designation will be used when discussing optical connection terminal 618 S2. The branch cable segment 424 extends from optical connection terminal 518 S1 to optical connection terminal 618 S2 entering optical connection terminal 618 S2 at branch cable port 32. In the optical connection terminal 618 S2, optical fibers F9-F12 route and connect in pairs i.e., two optical fibers, to a drop port 38, according to a certain port mapping scheme. In this example, the optical fiber pairs are F9 and F10, F11 and F12, with each pair terminated by a multi-fiber connector, which is shown as a two-fiber connector 54, received by a multi-fiber adapter 52. Each optical fiber pair optically connect to optical fibers in a respective drop cable 34 extending to subscriber premises. In this manner, at the distribution terminal 12, based on the certain port mapping scheme, the field technician may understand that optical fibers F9-F12 provide optical communication to particular subscriber premises connected to optical termination panel 618 S2. Additionally, the field technician can splice and terminate the optical fibers F9-F12 by just matching the color-coding of the optical fibers extending from termination points T9-T12, i.e., YL, VI, RS and AQ, respectively. Termination points T9-T12 may be identified at the distribution terminal 12 with optical terminal 618 S2 and, therefore, with the particular subscriber premises serviced by the optical connection terminal 618 S2. This is indicated by the section "S2" in the distribution terminal 12. The section "S2" may be a designated section of the consecutive sequence, with the plurality of optical fibers F9-F12 aligning to that section of the consecutive sequence. In Figure 4, optical connection terminal 618 S2 does not have a pass-through port 40 indicating that in this example no additional optical connection terminals are included in branch 320.

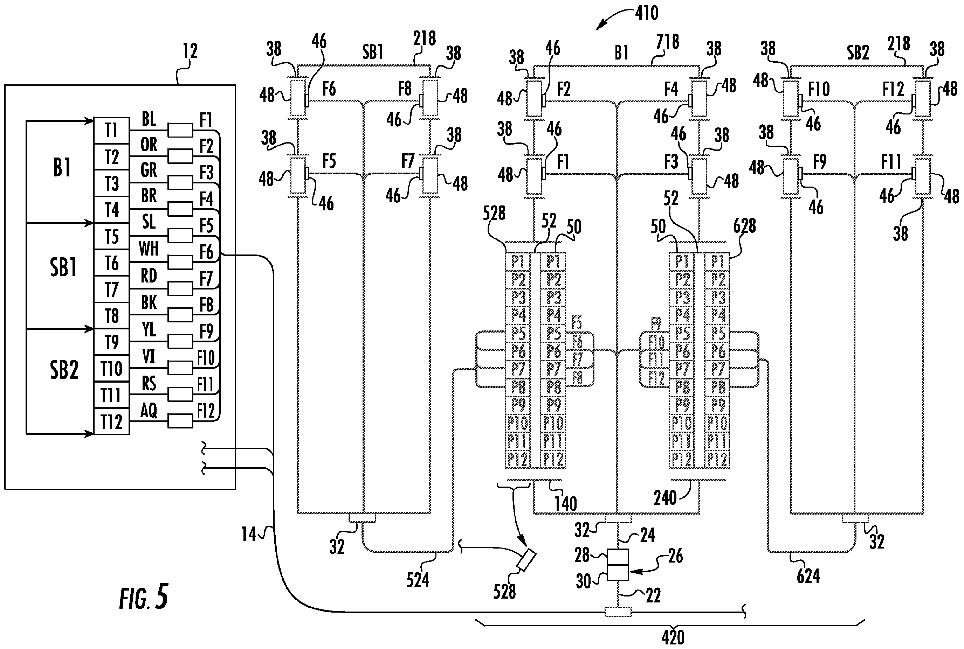

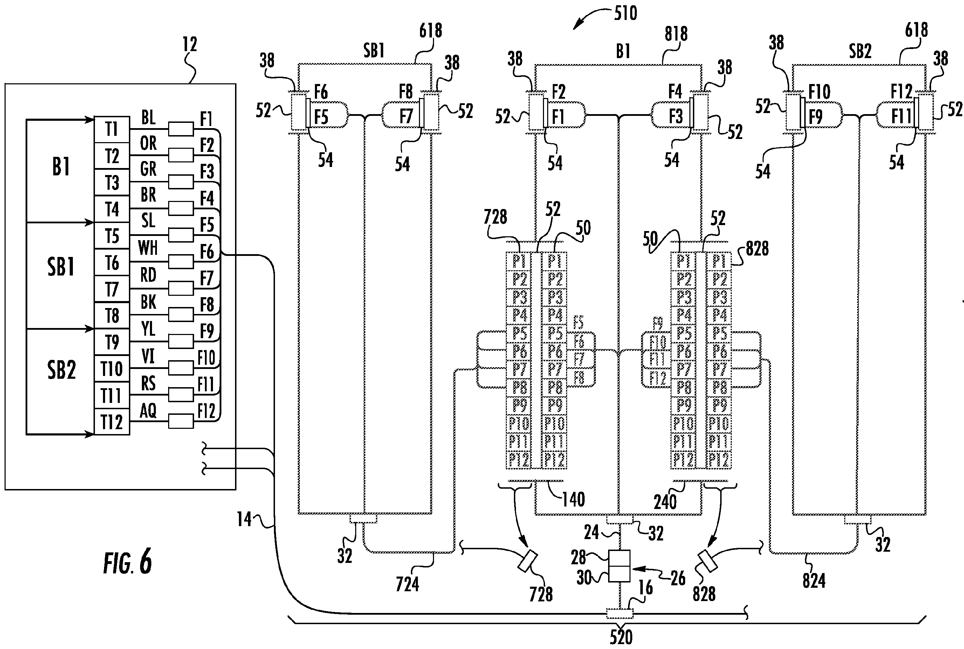

Turning now to Figures 5 and 6, there are shown examples of fiber optic networks having branches from a distribution terminal 12 to a branching optical connection terminal to form sub-branches off of the branch Figure 5 illustrates fiber optic network 410 comprising a branch 420. In Figure 5, the distribution terminal 12, distribution cable 14, and tether cable 22 with the connection to the branch cable 24 are consistent with that described with respect to Figure 2, and, therefore, will not be repeated with respect to Figure 5. As shown in Figure 5, branch 420 comprises the optical connection terminal 718 designated as "B1" and two optical connection terminals 218 designated as "SB1" and "SB2." Optical connection terminal 718 (B1) comprises four drop ports 38 and two pass-though ports 140, 240. In this manner, the two pass-through ports 140, 240 of the optical connection terminal 718 B1 may be used to establish sub-branches of branch 420, according to a certain port mapping scheme. Optical connection terminal 218 (SB1 and SB2) comprise four drop ports 38 and are consistent with the optical connection terminal 218 in Figure 2.

The optical fibers F1-F12 in branch cable 24 enter optical connection terminal 718 B1 through branch cable port 32. In optical connection terminal 718 B1, four optical fibers F1-F4 each route and connect to a drop port 38 according to a certain port mapping scheme and optically connect to respective drop cable 34 extending to subscriber premises in the same manner as discussed with reference to Figure 2. At the distribution terminal 12, based on the certain port mapping scheme, the field technician may understand that optical fibers F1-F4 provide optical communication to particular subscriber premises connected to optical termination panel B1. Additionally, the field technician can splice and terminate the optical fibers F1-F4 by just matching the color-coding of the optical fibers extending from termination points T1-T4, i.e. BL, OR, GR and BR. Termination points T1-T4 may be identified at the distribution terminal 12 with optical connection terminal B1 and, therefore, with the particular subscriber premises serviced by the optical connection terminal B1. This is indicated by the section "B1" in the distribution terminal 12. The section "B1" may be a designated section of the consecutive sequence, with the plurality of optical fibers F1-F4 aligning to that section of the consecutive sequence.

In the optical connection terminal 718 B1, optical fibers F5-F8 route to first pass-through port 140 and optical fibers F9-F12 route to second pass-through port 240. Optical fibers F5-F8 may be terminated by a multi-fiber connector 50 which is received by a multi-fiber adapter 52 seated in the first pass-through port 140. The multi-fiber connector 50 has twelve ports P1-P12 to which optical fibers may connect. The optical fibers F5-F8 connect to ports P5-P8, respectively, to centrally align the optical fibers F5-F8 on the multi-fiber connector 50 according to a certain port mapping scheme. Optical fibers F9-F12 may be terminated by a multi-fiber connector 50 which is received by a multi-fiber adapter 52 seated in the first pass-through port 240. The multi-fiber connector 50 has twelve ports P1-P12 to which optical fibers may connect. Instead of the optical fibers F9-F12 connecting to ports P9-P12, optical fibers F9-F12 connect to ports P5-P8, respectively, to centrally align the optical fibers F9-F12 on the multi-fiber connector 50.

First sub-branch cable 524 extends from optical connection terminal 718 B1 to optical connection terminal 218 SB1. The first sub-branch cable 524 may comprise four optical fibers and may be terminated by a network connector 528. The four optical fibers in the first sub-branch cable 524 may connect to ports P5-P8 of the network connector 528 to centrally align the optical fibers of the first sub-branch cable 524 in the network connector 528 according to a certain port mapping scheme. The network connector 528 may be received by the multi-fiber adapter 52 seated in the first pass-through port 140. Because the optical fibers of the first sub-branch cable 524 are centrally aligned on the network connector 528, being connected to ports P5-P8, the optical fibers of the first sub-branch cable 524 align with optical fiber F5-F8 when both the multi-fiber connector 50 and the network connector 528 are received by the multi-fiber adapter 52 seated in the first pass-through port 140. In this way, an optical connection is established between the optical fibers F5-F8 of the branch cable 24 and the four optical fibers of the first sub-branch cable 524, and the consecutive sequence of optical fiber designations and color-coding at the distribution terminal 12 remains consistent.

Second sub-branch cable 624 extends from optical connection terminal 718 B1 to optical connection terminal 218 SB2. The second sub-branch cable 624 may comprise four optical fibers and may be terminated by a network connector 628. The four optical fibers in the second sub-branch cable 624 may connect to ports P5-P8 of the network connector 628 to centrally align the optical fibers of the second sub-branch cable 624 in the network connector 628 according to a certain port mapping scheme. The network connector 628 may be received by the multi-fiber adapter 52 seated in the second pass-through port 240. Because the optical fibers of the second sub-branch cable 624 are centrally aligned on the network connector 628, being connected to ports P5-P8, the optical fibers of the second sub-branch cable 624 align with optical fiber F9-F12 when both the multi-fiber connector 50 and the network connector 628 are received by the multi-fiber adapter 52 seated in the second pass-through port 240. In this way, an optical connection is established between the optical fibers F9-F12 of the branch cable 24 and the four optical fibers of the second sub-branch cable 624, and the consecutive sequence of optical fiber designations and color-coding at the distribution terminal 12 remains consistent.

With continuing reference to Figure 5, because the optical fibers in the sub-branch cable 524 optically connect to optical fibers F5-F8, those optical fiber designation will be used when discussing optical connection terminal 218 SB1. The sub-branch cable 524 extends from optical connection terminal 718 B1 to optical connection terminal 218 SB1 entering optical connection terminal 218 SB1 at branch cable port 32. In the optical connection terminal 218 SB1, optical fibers F5-F8 each route and connect to a drop port 38 according to a certain port mapping scheme. The optical fibers F5-F8 route to the drop cable ports 38 and, thereby, an optical connection may be established between the optical fibers F5-F8 and the optical fiber of the respective drop cable 34 extending to subscriber premises. In this manner, at the distribution terminal 12, based on the certain port mapping scheme, the field technician may understand that optical fibers F5-F8 provide optical communication to particular subscriber premises connected to optical termination panel 218 SB1. Additionally, the field technician can splice and terminate the optical fibers F5-F8 by just matching the color-coding of the optical fibers extending from termination points T5-T8, i.e., SL, WH, RD and BK, respectively. Termination points T5-T8 may be identified at the distribution terminal 12 with optical terminal 218 SB1 and, therefore, with the particular subscriber premises serviced by the optical connection terminal 218 SB1. This is indicated by the section "SB1" in the distribution terminal 12. The section "SB1" may be a designated section of the consecutive sequence, with the plurality of optical fibers F5-F8 aligning to that section of the consecutive sequence. In Figure 5, optical connection terminal 218 SB1 does not have a pass-through port 40 indicating that in this example no additional optical connection terminals are included in the sub-branch of branch 420.

Additionally, because the optical fibers in the second sub-branch cable 624 optically connect to optical fibers F9-F12, those optical fiber designation will be used when discussing optical connection terminal 218 SB2. The sub-branch cable 624 extends from optical connection terminal 718 B1 to optical connection terminal 218 SB2 entering optical connection terminal 218 SB2 at branch cable port 32. In the optical connection terminal 218 SB2, optical fibers F9-F12 each route and connect to a drop port 38. The optical fibers F9-F12 route to the drop cable ports 38, according to a certain port mapping scheme, and, thereby, an optical connection may be established between the optical fibers F9-F12 and the optical fiber of the respective drop cable 34 extending to subscriber premises. In this manner, at the distribution terminal 12, based on the certain port mapping scheme, the field technician may understand that optical fibers F9-F12 provide optical communication to particular subscriber premises connected to optical termination panel 218 SB2. Additionally, the field technician can splice and terminate the optical fibers F9-F12 by just matching the color-coding of the optical fibers extending from termination points T9-T12, i.e., YL, VI, RS and AQ, respectively. Termination points T9-T12 may be identified at the distribution terminal 12 with optical terminal 218 SB2 and, therefore, with the particular subscriber premises serviced by the optical connection terminal 218 SB2. This is indicated by the section "SB2" in the distribution terminal 12. The section "SB2" may be a designated section of the consecutive sequence, with the plurality of optical fibers F9-F12 aligning to that section of the consecutive sequence. In Figure 5, optical connection terminal 218 SB2 does not have a pass-through port 40 indicating that in this example no additional optical connection terminals are included in the sub-branch of branch 420.

Because the port mapping scheme in these examples, a consistency with the sequencing of the optical fibers results at the distribution terminal 12, the optical connection terminal SB1 may be connected in the fiber optic network 410 prior to the optical connection terminal 718 B1. In other words, due to commercial and build out reasons it may be preferred to install an optical connection terminal with the structure of optical connection terminal 218 prior to installing an optical connection terminal with the structure of optical connection terminal 718. In such case, the optical connection terminal 218 is installed such that the sub-branch cable 524 becomes the branch cable 24 and the network connector 528 connects with network connection receptacle 30.

In this regard, at the distribution terminal 12, although optical connection terminal 718 B1 has not been installed yet, the field technician still splices and terminates the optical fibers F5-F8 by matching the color-coding of the optical fibers extending from termination points T5-T8, i.e., SL, WH, RD and BK, respectively. As such, termination points T5-T8 are still identified at the distribution terminal 12 with optical terminal 218 SB1 and, therefore, with the particular subscriber premises serviced by the optical connection terminal 218 SB1. This is indicated by the section "SB1" in the distribution terminal 12. In Figure 5, optical connection terminal 218 SB1 does not have a pass-through port 40 indicating that in this example no additional optical connection terminals are included in the sub-branch of branch 420.

When the optical connection terminal 718 B1 is to be installed, the network connector 528 may be disconnected from the network connection receptacle 30. The network connector 28 on branch cable 24 may then be connected to the network connection receptacle 30. As discussed above, the field technician splices and terminates the optical fibers F1-F4 by matching the color-coding of the optical fibers extending from termination points T1-T4, i.e. BL, OR, GR and BR. Termination points T1-T4 may be identified at the distribution terminal 12 with optical connection terminal B1 and, therefore, with the particular subscriber premises serviced by the optical connection terminal B1. This is indicated by the section "B1" in the distribution terminal 12. However, the field technician can splice and connect the optical fibers optically connected to optical connection terminal B1, without having to disconnect and/or reconnect the optical fibers optically connected to optical connection terminal SB1. In other words, optical connection terminal SB1 may remain active or "hot" while optical connection terminal B1 is being installed and connected. This example provides for a "hot swappable" optical connection terminal connection at the distribution terminal 12.

Referring now to Figure 6, an example illustrating fiber optic network 510 with branch 520 is presented. Branch 520 includes an optical connection terminal 818 designated as "B1" and two optical connection terminals 618 designated as "SB1" and "SB2." Optical connection terminal 818 (B1) comprises two drop ports 38 and two pass-though ports 140, 142. Optical connection terminal 618 (SB1 and SB2) comprise two drop ports 38. The example in Figure 6 is similar to the example illustrated in Figure 5, with the exception that branch 520 comprises the optical connection terminals that have optical fibers which route and connect in pairs, i.e., two optical fibers, to a drop port 38 according to a certain port mapping scheme. Therefore, a pair of optical fibers terminate with a multi-fiber connector, shown in Figure 6 as a two-fiber connector 54 which is received by a multi-fiber adapter 52 seated in the drop port 38 as more described above with reference to Figure 4. Additionally, in Figure 6, the first sub-branch cable 724 connects with optical connection terminal 818 B1 via network connector 728 through first pass-through port 140 in the same manner as the first sub-branch cable 524 connects with optical connection terminal 718 B1 via network connector 528 discussed with reference to Figure 5. Also, the second sub-branch cable 824 connects with optical connection terminal 818 B1 via network connector 828 through the second pass-through port 240 in the same manner as the second sub-branch cable 624 connects with optical connection terminal 718 B1 via network connector 628 discussed with reference to Figure 5. Therefore, such features will not be discussed again with reference to Figure 6.

Figure 6 is included to illustrate another example that provides the "hot swappable" feature as discussed with reference to Figure 5. In this example, the optical connection terminal 618 is installed first such that the sub-branch cable 724 becomes the branch cable 24 and the network connector 528 connects with network connection receptacle 30. In this regard, at the distribution terminal 12, based on the certain port mapping scheme, and although optical connection terminal 818 B1 has not been installed yet, the field technician still splices and terminates the optical fibers F5-F8 by matching the color-coding of the optical fibers extending from termination points T5-T8, i.e., SL, WH, RD and BK, respectively. As such, termination points T5-T8 are still identified at the distribution terminal 12 with optical terminal 618 SB1 and, therefore, with the particular subscriber premises serviced by the optical connection terminal 618 SB1. This is indicated by the section "SB1" in the distribution terminal 12. The section "SB1" may be a designated section of the consecutive sequence, with the plurality of optical fibers F5-F8 aligning to that section of the consecutive sequence. In Figure 6, optical connection terminal 618 SB1 does not have a pass-through port 40 indicating that in this embodiment no additional optical connection terminals are included in the sub-branch of branch 520.

When the optical connection terminal 818 B1 is to be installed, the network connector 728 may be disconnected from the network connection receptacle 30. The network connector 28 on branch cable 24 may then be connected to the network connection receptacle 30. As discussed above, the field technician splices and terminates the optical fibers F1-F4 by matching the color-coding of the optical fibers extending from termination points T1-T4, i.e. BL, OR, GR and BR. Termination points T1-T4 may be identified at the distribution terminal 12 with optical connection terminal B1 and, therefore, with the particular subscriber premises serviced by the optical connection terminal B1. This is indicated by the section "B1" in the distribution terminal 12. The section "B1" may be a designated section of the consecutive sequence, with the plurality of optical fibers F1-F4 aligning to that section of the consecutive sequence. The field technician can splice and connect the optical fibers optically connected to optical connection terminal B1, without having to disconnect and/or reconnect the optical fibers optically connected to optical connection terminal SB1. In other words, optical connection terminal SB1 may remain active or "hot" while optical connection terminal B1 is being installed and connected.

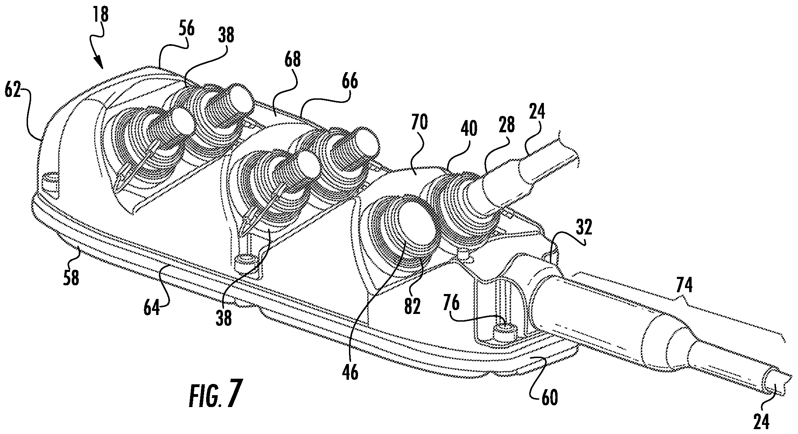

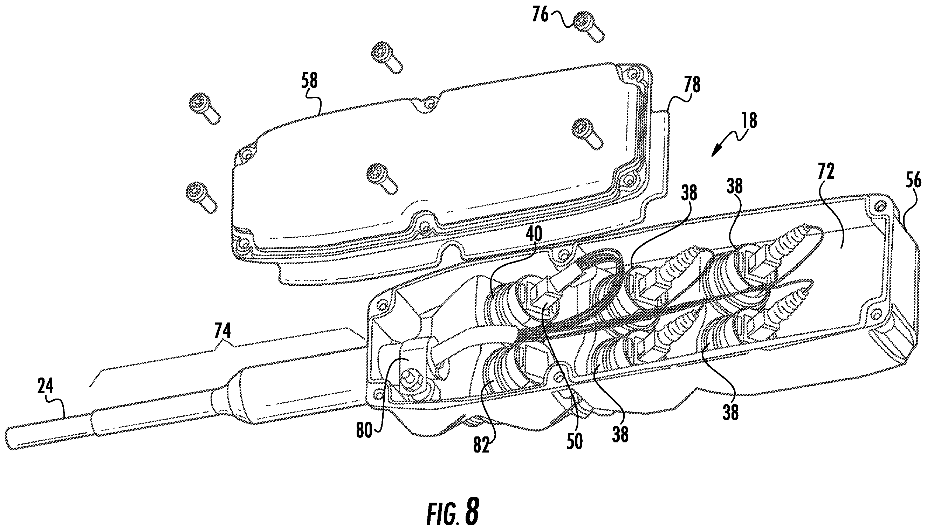

Turning now to Figures 7 and 8, an example of a multi-port device as an optical connection terminal 18 is shown. As shown in Figure 7, the optical connection terminal 18 comprises a base 56 and a cover 58 each made of a lightweight, yet rigid material, such as plastic, thermoplastic, composite or aluminum material. The base 56 and the cover 58 define an enclosure having an exterior surface. Additionally, the base 56 has opposed end walls 60, 62 and sidewalls 64, 66, of the exterior surface. The base 56 is further provided with an upper surface 68 of the exterior surface. The upper surface 68 of the base 56 is provided with a plurality of angled or sloped surfaces 70. Each angled surface 70 has at least one drop connector port 38 formed therethrough. Further, the base 56 is generally box-shaped and defines an interior cavity 72 for housing fiber optic hardware, such as connector ports, adapters, optical fiber routing guides, fiber hubs and the like. The base 56 may have any of a variety of shapes that is suitable for housing fiber optic hardware and for routing and connecting optical fibers of the branch cable 24, as described herein. However, by way of example only, the base 56 is generally rectangular and is elongated in the lengthwise direction relative to the widthwise direction between the opposed end walls 60, 62.

A branch cable port 32 is disposed through the exterior surface. Although the branch cable port 32 may be at any position through the exterior surface, in the embodiment shown, the branch cable port 32 is disposed in the end wall 60 of the base 56. The branch cable port 32 is operable for receiving a branch cable assembly 74 comprising the branch cable 24. The branch cable assembly 74 is inserted through the branch cable port 32 of the optical connection terminal 18. The end of the branch cable 24 having at least one pre-connectorized optical fiber mounted thereon is routed through the branch cable port 32 into the interior cavity 72. The branch cable assembly 74 is any type of assembly or structure that provides for the entrance of the branch cable 24 into the optical connection terminal 18, and the sealing of the branch cable 24 as it enters the optical connection terminal 18. Additionally, the branch cable assembly 74 may provide strain relief to the branch cable 24 as is known in the art. Alternatively, a multi-fiber connector (not shown) may be used to connect the branch cable 24 to the optical connection terminal 18. In such case, instead of the branch cable assembly 74 as depicted in FIGS. 7 and 8, the multi-fiber connector may be connected to an adapter seated within the branch cable port 32. Another multi-fiber connector (not shown) may be used to connect to the adapter in the interior cavity 72, thereby optically connect the optical fibers of the branch cable 24 to optical fibers disposed within the optical connection terminal 18.

The cover 58 is adapted to be attached to the base 56 such that the optical connection terminal 18 is re-enterable to provide ready access to the interior cavity 72, particularly in the field, if necessary to reconfigure the optical fibers of the branch cable 24 relative to the drop ports 38 and the pass-through port 40. Specifically, the base 56 and cover 58 are preferably provided with a fastening mechanism 76 such as, but not limited to, clasps, fasteners, threaded bolts or screws and inserts, or other conventional means for securing the cover 58 to the base 56 in the closed configuration. However, the cover 58 may be slidably attached to the base 56 to selectively expose portions of the interior cavity 72 of the base 56. Alternatively, the cover 58 may be hingedly attached to the base 56 at one or more hinge locations (not shown) to allow the cover 58 and base 56 to remain secured to one another in the opened configuration. A gasket 78 may be disposed between a peripheral flange provided on the base 56 and the interior of the cover 58. As shown, the gasket 78 is generally rectangular and of a size corresponding to that of the base 56 and the cover 58. Alternatively, in certain locations the service provider may determine that it is not desirable that optical connection terminal 18 be enterable in the field, and, therefore, may decide to fasten the base 56 to the cover 58 by welding, for example using an epoxy type of weld.

As illustrated in Figure 8, the branch cable 24 passes through the branch cable port 32 and enters the optical connection terminal 18. A securing mechanism 80, such as for example, a fastener, clamp and nut, bracket or clasp, is provided in the interior cavity 72 of the optical connection terminal 18 to secure the branch cable 24 to the base 56. Alternatively, instead of the branch cable 24 passing through the branch cable port 32, the branch cable 24 may have a connector on the end, which, in such case, would connect with an adapter seated in the branch cable port 24. Also, alternatively, the optical fibers in the branch cable 24 may be splice, for example, fusion spliced, with optical fibers in the interior cavity. In this example, the branch cable 24 is a twelve fiber optical cable. It should be understood that the disclosure is not limited to a branch cable 24 having any specific number of optical fibers. A branch cable 24 having less or more than twelve optical fibers may be used. Within the optical connection terminal 18, at least one individual optical fiber of the branch cable 24 in the form of a pigtail terminates at its respective connector. The pre-connectorized optical fiber or pigtail is routed within the interior cavity 72 of the optical connection terminal 18 and connects to an adapter 48 (not shown) seated within the respective drop port 38. The optical fiber or pigtail may be pre-connectorized with any suitable connector, for example, an SC connector, for single fibers , and a MTP, for multiple fibers, available from Corning Cable Systems LLC of Hickory, N.C. In Figure 8 four pre-connectorized optical fibers are shown each connecting to the respective drop port 38. A field-connectorized or pre-connectorized drop cable 34 may be connected to the adapter 48 seated within the drop port 38 from the exterior of the optical connection terminal 18. The drop cable 34 may be connectorized or pre-connectorized with any suitable ruggedized connector, for example, an OptiTap^{®} connector, for single fiber, or OptiTip^{®} connector, for multiple fibers, available from Corning Cable Systems LLC of Hickory, N.C.

Additionally, optical fibers of the branch cable 24 may be connected to a pass-through connector 50 (not shown). The pass-through connector 50 may be any type of multi-fiber connector, such as an MTP connector available from Corning Cable Systems LLC of Hickory, N.C. Alternatively, a splice, such as a fusion splice may be used instead of a pass-through connector 50. Eight optical fibers of the branch cable 24 are connected to a twelve port pass-through connector 50. The pass-through connector 50 connects to a multi-fiber adapter 52 seated in the pass-through connector port 40. A segment of the branch cable 24 that extends to another optical connection terminal connects to the multi-fiber adapter 52 through a network connector 28 external to optical connection terminal 18. As described above, the network connector 28 may be any type of multi-fiber connector, such as an OptiTip fiber optic connector. Thus, the multi-fiber adapter 52 may be a MTP/OptiTip adapter to accept and connect the pass-through connector 50, a MTP connector, and the network connector 28, an OptiTip connector. In this manner, the optical connection terminal 18 may be series and/or sub-branch connected with another optical connection terminal 18. A spare port 82, is shown in Figure 7 with a cap 46 attached thereon. The spare port 82 may be used for an additional drop port 38 or the pass-through port 40, or an additional pass-through port 40. In this manner, optical coupling according to a port mapping scheme may be established between certain of the optical fibers of the branch cable 24 in the interior cavity 72 and to the branch cable 24 that extends between optical connection terminals.

## Claims

1. A fiber optic network device comprising:
an input port adapted to receive a multi-fiber cable having active optical fibers designated in a consecutive sequence from F1 to F12,
a first plurality of optical fibers in sequence in the consecutive sequence F1 to F12 disposed within the fiber optic network device and extending from the input port, wherein the first plurality of optical fibers align to a first section (S1) of the consecutive sequence, and wherein the first section (S1) comprises a first four optical fibers from F1 to F4 in sequence in the consecutive sequence;
a second plurality of optical fibers in sequence in the consecutive sequence F1 to F12 disposed within the fiber optic network device and extending from the input port, wherein the second plurality of optical fibers align to a second section (S2) of the consecutive sequence, and wherein the second section (S2) comprises a next eight optical fibers from F5 to F12 in sequence adjacent the first section in the consecutive sequence;
a plurality of drop ports (38) opening into the fiber optic network device, wherein the plurality of drop ports (38) are adapted to optically couple ones of the first plurality of optical fibers from F1 to F4 to at least one drop cable (34) external to the fiber optic network device according to a first port mapping scheme; and,
a pass-through port (40, 140, 240) wherein the pass-through port (40, 140, 240) is adapted to optically couple a part of the plurality of optical fibers from F5 to F12 to a second fiber optic network device through a multi-fiber adapter (52) having a plurality of connection ports positioned in a row, the fiber optic network device being **characterised in that** said consecutive sequence from F1 - F12 of the active optical fibers is a color-coded sequence of F1 - blue, F2 - orange, F3 - green, F4 - brown, F5 - slate, F6 - white, F7 - red, F8 - black, F9 - yellow, F10 - violet, F11 - rose, F12 - aqua, wherein the optical fiber color indicates the optical fiber in the consecutive sequence from F1 - F12, the fiber optic network device being further **characterised in that** the said pass-through port is adapted to optically couple the second plurality of optical fibers from F5 - F12 to the said second fiber optic network device through the multi-fiber adapter having the plurality of connection ports, wherein the connection ports of the multi-fiber adapter are positioned in a row in a sequence from P1 to P12 providing inner connection ports and wherein the second plurality of optical fibers from F5 to F12 optically connect to the plurality of connection ports in a central alignment from P3 to P10 at the pass-through port (40, 140, 240) according to a second port mapping scheme.

## Patentansprüche

1. Faseroptische Netzwerkvorrichtung, aufweisend:
einen Eingangsanschluss, der vorgesehen ist, um ein Mehrfaserkabel anzunehmen, das aktive Lichtleiterfasern aufweist, die in einer aufeinander folgenden Sequenz als F1 bis F12 bezeichnet werden,
eine erste Vielzahl von Lichtleiterfasern, die in dieser Reihenfolge der aufeinander folgenden Sequenz F1 bis F12 in der faseroptischen Netzwerkvorrichtung angeordnet sind und sich von dem Eingangsanschluss erstrecken, wobei die erste Vielzahl der Lichtleiterfasern mit einem ersten Segment (S1) der aufeinander folgenden Sequenz ausgerichtet ist, und wobei das erste Segment (S1) die ersten vier Lichtleiterfasern von F1 bis F4 in dieser Reihenfolge in der aufeinander folgenden Sequenz aufweist;
eine zweite Vielzahl von Lichtleiterfasern, die in dieser Reihenfolge der aufeinander folgenden Sequenz F1 bis F12 innerhalb der faseroptischen Netzwerkvorrichtung angeordnet sind und sich von dem Eingangsanschluss erstrecken, wobei die zweite Vielzahl der Lichtleiterfasern mit einem zweiten Segment (S2) der aufeinander folgenden Sequenz ausgerichtet ist, und wobei das zweite Segment (S2) die nächsten acht Lichtleiterfasern von F5 bis F12 in dieser Reihenfolge benachbart zu dem ersten Segment in der aufeinander folgenden Sequenz aufweist;
eine Vielzahl von Abzweiganschlüssen (38), die sich in die faseroptische Netzwerkvorrichtung öffnet, wobei die Vielzahl von Abzweiganschlüssen (38) vorgesehen ist, um eines der ersten Vielzahl der Lichtleiterfasern von F1 bis F4 gemäß einem ersten Anschlusszuordnungsschema an zumindest ein Abzweigkabel (34) außerhalb der faseroptischen Netzwerkvorrichtung zu koppeln; und
einen Durchleitanschluss (40, 140, 240), wobei der Durchleitanschluss (40, 140, 240) vorgesehen ist, um einen Teil der Vielzahl von Lichtleiterfasern von F5 bis F12 durch einen Mehrfaseradapter (52) mit einer Vielzahl von Verbindungsanschlüssen, die in einer Reihe positioniert sind, optisch an eine zweite faseroptische Netzwerkvorrichtung zu koppeln, wobei die faseroptische Netzwerkvorrichtung **dadurch gekennzeichnet ist, dass** die aufeinander folgende Sequenz von F1 - F12 der aktiven Lichtleiterfasern eine farbkodierte Sequenz wie folgt ist: F1 - blau, F2 - orange, F3 - grün, F4 - braun, F5 - schiefergrau, F6 - weiß, F7 - rot, F8 - schwarz, F9 - gelb, F10 - violett, F11 - rosa, F12 - türkis, wobei die Farbe der Lichtleiterfaser die Lichtleiterfaser in der aufeinander folgenden Sequenz von F1 - F12 angibt, die faseroptische Netzwerkvorrichtung des Weiteren **dadurch gekennzeichnet ist, dass** der Durchleitanschluss vorgesehen ist, um die zweite Vielzahl der Lichtleiterfasern von F5 - F12 optisch mittels des Mehrfaseradapters mit der Vielzahl von Verbindungsanschlüssen an die zweite faseroptische Netzwerkvorrichtung zu koppeln, wobei die Verbindungsanschlüsse des Mehrfaseradapters in einer Reihe in einer Sequenz von P1 bis P12 positioniert sind, die innere Verbindungsanschlüsse bereitstellen, und
wobei die zweite Vielzahl von Lichtleiterfasern von F5 bis F12 in einer zentralen Ausrichtung von P3 bis P10 an dem Durchleitanschluss (40, 140, 240) gemäß einem zweiten Anschlusszuordnungsschema optisch mit der Vielzahl von Verbindungsanschlüssen verbunden ist.

## Revendications

1. Dispositif de réseau à fibres optiques comprenant :
un port d'entrée conçu pour recevoir un câble multifibre comportant des fibres optiques actives conçues dans une séquence consécutive de F1 à F12,
une première pluralité de fibres optiques dans l'ordre dans la séquence consécutive F1 à F12 disposée à l'intérieur du dispositif de réseau à fibres optiques et s'étendant depuis le port d'entrée, dans lequel la première pluralité de fibres optiques s'aligne sur une première section (S1) de la séquence consécutive, et dans lequel la première section (S1) comprend quatre premières fibres optiques de F1 à F4 dans l'ordre dans la séquence consécutive ;
une seconde pluralité de fibres optiques en ordre dans la séquence consécutive F1 à F12 disposée à l'intérieur du dispositif de réseau à fibres optiques et s'étendant depuis le port d'entrée, dans lequel la seconde pluralité de fibres optiques s'aligne sur une seconde section (S2) de la séquence consécutive, et dans lequel la seconde section (S2) comprend huit fibres optiques suivantes de F5 à F12 dans l'ordre adjacentes à la première section dans la séquence consécutive ;
une pluralité de ports de dérivation (38) s'ouvrant dans le dispositif de réseau à fibres optiques, dans lequel la pluralité de ports de dérivation (38) est conçue pour coupler optiquement certaines fibres de la première pluralité de fibres optiques de F1 à F4 à au moins un câble de dérivation (34) externe au dispositif de réseau à fibres optiques selon un premier schéma de mappage de ports ; et,
un port traversant (40, 140, 240) dans lequel le port traversant (40, 140, 240) est conçu pour coupler optiquement une partie de la pluralité de fibres optiques de F5 à F12 à un second dispositif de réseau à fibres optiques par l'intermédiaire d'un adaptateur multifibre (52) comportant une pluralité de ports de connexion positionnés en ligne, le dispositif de réseau à fibres optiques étant **caractérisé en ce que** ladite séquence consécutive de F1 à F12 des fibres optiques actives est une séquence à codage couleur de F1 - bleu, F2 - orange, F3 - vert, F4 - brun, F5 - ardoise, F6 - blanc, F7 - rouge, F8 - noir, F9 - jaune, F10 - violet, F11 - rose, F12 - bleu eau, dans lequel la couleur de la fibre optique indique la fibre optique dans la séquence consécutive de F1 à F12, le dispositif de réseau à fibres optiques étant en outre **caractérisé en ce que** ledit port traversant est conçu pour coupler optiquement la seconde pluralité de fibres optiques de F5 à F12 audit second dispositif de réseau à fibres optiques par l'intermédiaire de l'adaptateur multifibre comportant la pluralité de ports de connexion, dans lequel les ports de connexion de l'adaptateur multifibre sont positionnés en ligne dans une séquence de P1 à P12 fournissant des ports de connexion internes
et
dans lequel la seconde pluralité de fibres optiques de F5 à F12 se connecte optiquement à la pluralité de ports de connexion dans un alignement central de P3 à P10 au niveau du port traversant (40, 140, 240) selon un second schéma de mappage de ports.
